# EUROPEAN PATENT APPLICATION

(11) **EP 1 304 906 A2**
(43) Date of publication of application: **23.04.2003**
(21) Application number: 02023414.2
(22) Date of filing: 18.10.2002
(51) Int. Cl.: H05B 33/00, H05B 33/02, H05B 33/10

(54) **Manufacturing method**

(30) Priority: 22.10.2001 JP 2001323288
(71) Applicant: Seiko Precision Inc., Narashino-shi, Chiba-ken (JP)
(72) Inventor: Saito, Atsushi, c/o Seiko Precision Inc., Narashino-shi, Chiba-ken (JP); Naoi, Yasufumi, c/o Seiko Precision Inc., Narashino-shi, Chiba-ken (JP); Yoneda, Koji, c/o Seiko Precision Inc., Narashino-shi, Chiba-ken (JP)
(74) Representative: Grünecker, Kinkeldey, Stockmair & Schwanhäusser Anwaltssozietät

(57) **Abstract**

The invention refers to a manufacturing method of an EL insert molding which can manufacture the EL element without damage while a temperature and a pressure of resin to be injected are maintained on an optimum forming condition, wherein a luminous portion 3A and a non-luminous portion 3B are provided in an EL element 3. The EL element 3 is inserted in a cavity 15 of an injection die, resin is injected into the cavity to manufacture the EL insert molding. In the cavity 15, a gate portion 18 is provided at a position opposite to the non-luminous portion 3B of the EL element 3. A decorative film 2 may be formed integrally in front of the EL element 3.

## Description

The present invention relates to a manufacturing method of an electroluminescent (EL) insert molding utilized for a mobile phone, a mobile information terminal, an electric appliance, an industrial equipment, an audio equipment, and an electrical component for automobiles and the like.

In the manufacturing method of the electroluminescent (EL) element of a prior art, a gate injecting resin of an injection die is provided at an optional position in a cavity, there is no attention concerning a positional relation opposite to an inserted EL element.

For this reason, a luminous portion of the EL element is damaged from heat and pressure of the resin injected from the gate, which might reduce quality of the EL element to give damage such as lighting failure and the like to the EL element. Measures such as reduction of a temperature of the resin to be injected, reduction of a pressure of the injection, and the like are tried in order to prevent the lighting failure of the EL element, however creation of molding defect has high probability, because the measures are not always an optimum forming condition.

In view of the foregoing, it is an objective of the invention to provide a manufacturing method of the EL insert molding which does not damage the EL element and does not cause the lighting failure of the EL element while the temperature and the pressure of the resin to be injected are maintained at the optimum forming condition.

This objective is solved in an inventive manner by a manufacturing method of an EL insert molding, wherein an EL element provided with a luminous portion and a non-luminous portion is inserted into a cavity of an injection die, a gate portion is provided at a position opposite to the non-luminous portion of the EL element in the cavity, and resin is injected from the gate portion into the cavity to form the EL insert molding. By this construction, the EL insert molding which does not damage the EL element can be produced while the temperature and the pressure of the resin to be injected are maintained at the optimum forming condition.

It is preferable to design that a decorative film is integrally formed in a front of the EL element.
- Fig. 1: is a cross-sectional view showing an embodiment, and
- Fig. 2: is a partially enlarged cross-sectional view.

An embodiment of the invention will be described referring to the accompanying drawings.

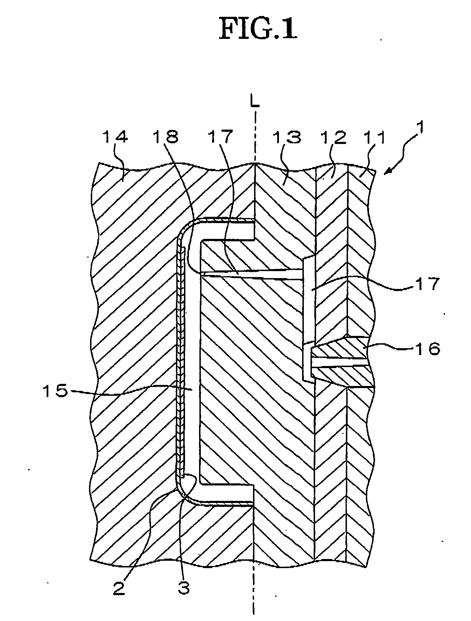

Fig. 1 is a cross-sectional view of an embodiment which a sheet, in which a decorative film 2 and an EL element 3 are integrally provided, is inserted into a cavity of an injection die 1 and molding resin is injected into the cavity of a backside of the EL element 3 to manufacture an EL insert molding.

In the injection die 1, a runner stripper plate 12 is arranged in front of a front plate 11, a cavity-retainer plate 13 is arranged in front of the runner stripper plate 12. A core-retainer plate 14 is provided opposite to the cavity-retainer plate 13, a cavity 15 is provided between the cavity-retainer plate 13 and the core-retainer plate 14. A mold sprue 16 supplying injection resin is fixed in the front plate 11, the resin is injected from a gate portion 18 into the cavity 15 through a runner portion 17 communicated with an injection mouth of the resin of the mold sprue. A parting line L is between the cavity-retainer plate 13 and the core-retainer plate 14.

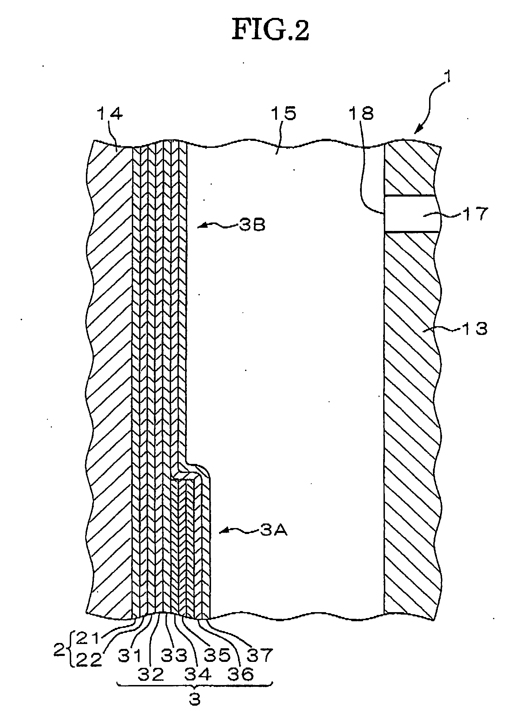

The decorative film 2 and the EL element 3 which are inserted in the cavity 15 will be described below. As shown in Fig. 2, in the decorative film 2, a transparent film 21 having a thickness of about 175 µm is formed by a polymer alloy (PC/PBT) including polycarbonate (PC) and polybutylene terephthalate (PBT), a decorative layer 22 drawn by a pattern, an illustration, a character, and the like is formed on the transparent film 21.

In the EL element 3, indium tin oxide (ITO) as a transparent electrode is deposited on a substrate film 31 made of polycarbonate (PC) to form a transparent electrode layer 32, or needle crystals of ITO dispersed in binder resin is printed to form the transparent electrode layer 32. In the embodiment, a thickness of the transparent film 31 is 100 µm.

On the transparent electrode layer 32, luminous ink is printed in a place to be luminous to form a luminous layer 33. Zinc sulfide (ZnS) doped by Cu is used as a luminous body constituting the luminous ink. By using a binder which copolymer of vinylidene fluoride and propylene hexafluoride as a fluororesin binder is dissolved in methyl ethyl ketone as a solvent, the luminous body and the binder are mixed and stirred to make the luminous ink. The luminous ink is printed on the transparent electrode layer 32 by a method such as screen printing, and then the luminous layer 33 is formed by heating and drying.

A ferroelectric material layer 34 is formed on the luminous layer 33 by the same way of printing. Insulating ink forming the ferroelectric material layer 34 is made by mixing and stirring a ferroelectric material including barium titanate (BaTiO₃) and the above-described fluororesin binder. Carbon ink is printed on the ferroelectric material layer 34 to form a backside electrode layer 35 by heating and drying. The backside electrode layer 35 may include carbon powder, silver powder, copper powder, and polyester as the binder.

Though a luminous portion 3A is formed in such a way as to laminate the luminous layer 33, the ferroelectric material layer 34, and the backside electrode layer 35 on the transparent electrode layer 32, a place where the luminous layer and the like are not laminated is a non-luminous portion 3B, the EL element 3 includes the luminous portion 3A and the non-luminous portion 3B. A protection layer 36 is formed over the transparent electrode layer 32 of the non-luminous layer 3B and the backside electrode layer 35 of the luminous portion 3A. The protection layer 36 may be an electrically insulating material such as polyester, acrylic resin, polyvinyl chloride (PVC), and the like. Polyester is a general name of a plurality of materials, concretely polyethylene terephthalate (PET), polybuthylene terephthalate (PBT) and the like can be used as the protection layer 36.

Acrylic resin is also a general name, concretely polymethyl methacrylate (PMMA) resin and the like can be used as the protection layer 36.

Furthermore, an adhesive line 37 is formed on the protection layer 36. The adhesive line 37 is formed by printing screen printing ink for the insert molding, a material, which adheres strongly to the insert molding resin and has good heat resistance and properties of cold setting, is used as the screen printing ink.

The EL element 3 formed by the above-described method is adhered to a backside of the decorative film 2 by using a bonding agent or an adhesive material such as a double-sided adhesive tape and the like. The bonded decorative film 2 and EL element 3 are plastically deformed into a desirable shape, for example, a three dimensional shape of box and the like, the plastically deformed decorative film 2 and EL element 3 are inserted in the cavity 15. In the embodiment shown in Fig. 1, though the decorative film 2 corresponds to an inner face of the cavity 15 and the EL element 3 is located within a range of a bottom face of the cavity 15, dimensions of the decorative film 2 and the EL element 3 are not limited to the dimensions shown in Fig. 1, the decorative film 2 may be smaller than that shown in Fig. 1 or the EL element 3 may reach to a side face of the cavity 15.

The gate portion 18 of the injection die 1 is formed at a position opposite to the non-luminous portion 3B of the EL element 3 when the EL element 3 is inserted in the cavity 15. Though only one of the gate portion 18 is shown in Fig. 1, the number of gate portions is not limited to the gate portion 18 shown in Fig. 1, a plurality of gate portions may be provided, any gate portion should be provided opposite to the non-luminous portion 3B of the EL element 3.

Then, resin is injected in the cavity 15 provided adjacent to the adhesive layer 37 through the mold sprue 16, the runner portion 17, and the gate portion 18 to form the EL insert molding. It is preferable from a view point of stronger bond with the protection layer 36 that the same material as the protection layer 36, a polymer alloy containing the same material as the protection layer 36 and other material, a material having higher melting point than the material of the protection layer 36 and the like are used as the resin to be injected.

For example, PET/PP, PET/PC, and PET/PE can be used as the polymer alloy in case that PET is used as the protection layer 36, PBT/PC, PBT/PPE, and PBT/ABS can be used as the polymer alloy in case that PBT is used as the protection layer 36, PMMA/PP, PMMA/PC, and PMMA/PS can be used as the polymer alloy in case that PMMA is used as the protection layer 36, and PVC/PP, PVC/PE, and PVC/PS and the like can be used as the polymer alloy in case that PVC is used as the protection layer 36. Where PP is polypropylene, PE is polyetylene, PE is polyphenylene ether, and PS is polystyene.

In the material having higher melting point than the material of the protection layer 36, at first, with reference to the melting point of the materials of the protection layer, PET is 250°C, PBT is 220°C, PMMA is 125°C, and PVC is 170°C, on the other hand, with reference to the material having higher melting point, nylon 6 (PA6) is 215°C, PC is 230°C, polyacetal (POM) is 165°C, and polyphenylene sulfide (PPS) is 285°C. Accordingly, PPS as the material having higher temperature is applicable to PET or its polymer alloy, PPS and PC are applicable to PBT or its polymer alloy, any one of PA6, PC, POM, and PPS is applicable to PMMA or its polymer alloy, and PA6, PC, and PPS are applicable to PVC or its polymer alloy.

The above-described resin is injected from the gate portion 18 into the cavity 15. As described above, the gate portion 18 is opposite to the non-luminous portion 3B of the EL element. That is to say, since the gate portion 18 is not opposite to the luminous portion 3A including the luminous layer 33, it is not generated that the luminous portion 3A is damaged from heat and pressure of the resin in the injection to create the lighting failure and the like. Furthermore, the adhesive line 37 is melted by the heat of the resin, since the resin contains the same material as the material of the protection layer 36, the resin and the material of the protection layer 36 adhere firmly each other by melting. For this reason, peeling and the like never occurs from a bonding point between the resin and the protection layer 36 after the molding.

According to the teaching of the embodiment described above, because the gate portion is provided at a position opposite to the non-luminous portion of the EL element in the cavity of the injection die, the EL insert molding can be manufactured without damaging the EL element while temperature and pressure of the resin to be injected are maintained at an optimum forming condition, which allows the high-quality EL insert molding having no lighting failure to be provided.

From the above, there is derivable (amongst others) a manufacturing method of an EL insert molding which can manufacture the EL element without damage while a temperature and a pressure of resin to be injected are maintained on an optimum forming condition, wherein a luminous portion 3A and a non-luminous portion 3B are provided in an EL element 3. The EL element 3 is inserted in a cavity 15 of an injection die, resin is injected into the cavity to manufacture the EL insert molding. In the cavity 15, a gate portion 18 is provided at a position opposite to the non-luminous portion 3B of the EL element 3. A decorative film 2 may be formed integrally in front of the EL element 3.

## Claims

1. A manufacturing method of an EL insert molding **characterized in that** an EL element provided with a luminous portion and a non-luminous portion is inserted into a cavity of an injection die, a gate portion is provided at a position opposite to the non-luminous portion of the EL element in the cavity, and resin is injected from the gate portion into the cavity to form the EL insert molding.

2. A manufacturing method according to claim 1, **characterized in that** a decorative film is integrally formed in a front of the EL element.
